(19) Europäisches Patentamt
European Patent Office
Office européen des brevets

(11) **EP 3 806 303 A1**

(12) **EUROPEAN PATENT APPLICATION**

(43) Date of publication:
**14.04.2021 Bulletin 2021/15**

(21) Application number: **19202214.3**

(22) Date of filing: **09.10.2019**

(51) Int Cl.:
*H02M 3/06* (2006.01)     *H02M 3/07* (2006.01)
*H02M 7/5387* (2007.01)     *H02M 1/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventor: **Mondal, Gopal
91058 Erlangen (DE)**

(54) **ALTERNATING CAPACITOR STEP-DOWN DC/DC CONVERTER**

(57)     A two-stage converter for conversion between MV/HV DC and MV/LV AC, where the DC voltage is stepped down to an intermediate DC voltage by a capacitor voltage divider and a switch circuit that cycles between the capacitors to provide the intermediate DC voltage and a two-level inverter converts the intermediate DC voltage to a one- or three-phase AC voltage.

FIG 2

EP 3 806 303 A1

## Description

The present invention relates to a DC/DC power converter and a method of operation for the power converter.

Due to the increase of renewable energy sources and DC supply lines such as high voltage direct current (HVDC) supply lines power conversion at elevated DC voltage levels is becoming more important. Modular multilevel controllers (MMC) may be used to convert a high DC voltage to an AC voltage. A high voltage transformer may then reduce the AC voltage level. Both the MMC and the transformer tend to be bulky and expensive solutions. In another solution, DC converters with transformers may step down the voltage, after which a conversion to AC may be added. Again, the transformers are bulky, and the converter stages of the DC/DC conversion reduce the overall efficiency of the conversion.

The objective of the present invention is to provide an improved converter with a comparatively simple setup.

A converter for converting between a first and a second DC voltage in accordance with the invention comprises an upper and lower first terminal for connecting to the first DC voltage and a number of serially connected capacitors forming a capacitor series which is arranged between the first terminals and an equal number of serially connected semiconductor switches forming a first switch series, wherein second terminals for connecting to the second DC voltage are formed by the end nodes of the first switch series. It further comprises an upper switch comprising a serial connection of one or more semiconductor switches connected between the upper terminal and the first terminal of the first switch series and a lower switch comprising a serial connection of one or more semiconductor switches connected between the lower terminal and the second terminal of the first switch series. For each node between consecutive capacitors of the capacitor series, an anti-serial connection of at least two semiconductor switches connecting that node to a corresponding node between consecutive switches of the first switch series is provided.

Advantageously, the converter can be used to directly convert high voltage DC to low voltage DC without any use of a step-down transformer, reducing the size of the circuit. The circuit is, in other words, transformerless. It is to be understood that the term high voltage is meant to cover the range from 1 kV upward to 300 kV or more, while low voltage DC is meant to cover the voltage range from 100 kV downward. In some typical embodiments the high DC voltage will be a voltage between 2 kV and 40 kV, while the low DC voltage will be a voltage between 100 V and 500 V, e.g. 400 V. In other typical embodiments, the high DC voltage will be a voltage of 100 kV to 800 kV while the low DC voltage will be a voltage in the "MV" range of 10 kV to 50 kV.

As a further advantage the conversion ratio between the high and the low voltage can be chosen by adjusting the number of capacitors in the capacitor series and the preferably equal number of semiconductor switches in the first series of semiconductor switches, as the low voltage is equal to the high voltage divided by the number of capacitors. The converter is, in other words, modular and scalable to meet the requirements.

In comparison with a modular multilevel converter the converter of the present invention is less complex and uses a smaller number of switches with smaller size of capacitors, reducing its bulk and price.

Further features that may be added alone or together in exemplary embodiments of the invention include:

- The converter may comprise a controller for controlling the semiconductor switches. The controller is arranged to, at any one time, connect a single one of the capacitors of the capacitor series to the second terminals by switching on all semiconductor switches of the first switch series except for the semiconductor switch corresponding to that capacitor and switching on the anti-serial connections and/or upper or lower switch directly connected to that capacitor while switching off all other of the anti-serial connections and/or upper or lower switches. The controller may for example traverse all capacitors of the capacitor series, in any order. In another embodiment, it may traverse only capacitors of a subset of the capacitors of the capacitor series, leaving others unused as back-up capacitors in the case of a failure of elements of the converter.

- The upper and lower switch may have the same number of semiconductor switches.

- The converter of any of the preceding claims wherein the semiconductor switches are IGBTs. In another embodiment, the switches may be MOSFETs.

- The converter may be used to form a DC/AC converter for converting between a DC voltage of a first voltage level and an AC voltage of a second voltage level that is lower than the first voltage level wherein the DC/AC converter additionally comprises a DC/AC converter stage for converting between the second DC voltage and an AC voltage of the second voltage level, wherein the DC/AC converter stage comprises an upper and lower second terminal for connecting the second DC voltage and, arranged between the second terminals, a parallel circuit of one or more half-bridges of diodes or semiconductor switches, the node between the diodes or semiconductor switches of each of the half-bridges forming an AC terminal of the converter.

In addition to the advantages of the DC/DC converter described above the DC/AC converter is flexible as the switching frequency of the DC/AC converter stage and (DC/DC) converter are independent. Therefore, the frequency of the DC/AC converter can be chosen to optimize losses and filter size while the switching frequency of the DC/DC converter can be chosen to optimize between the voltage ripple of the capacitors of the capacitor series and switching losses. The design of the whole converter may therefore be adapted to the requirements.

The DC/AC converter may typically be employed for a DC voltage in the range of 2 kV to 40 kV and an AC voltage equal to a typical grid voltage of 400 V.

- The capacitance of the capacitors of the capacitor series may be in the range of

$$C = P_{rated} / (V_{DC} * N * V_{ripple} * 3 * f_{sw})$$

$P_{rated}$ is the rated power,
$V_{DC}$ is the DC input voltage of the first voltage level,
N is the number of series capacitors,
$V_{ripple}$ is the peak to peak allowed ripple voltage,
$f_{sw}$ is the switching frequency of the AC/DC converter.

Particularly the capacitance may be between 50 % of the value given by the formula and 200 % of that value, particularly between 80 % and 120 % of the value given by the formula.

In an embodiment of the invention, the values may be $P_{rated}$ = 12 kW, $f_{sw}$ = 48 kHz, $V_{DC}$ = 2.6 kV, N = 4 and $V_{ripple}$ = 0.11 V, resulting in an ideal capacitance value of ~72 μF. In this example values for the capacitance may be between ~36 μF and ~142 μF or particularly between ~58 μF and ~87 μF. For example the capacitors may have a capacitance of 70 μF.

Embodiments of the present invention are now described with reference to the accompanying drawings to which the invention is not limited.

Fig. 1 illustrates a modular multilevel converter according to the prior art;

Figs. 2 and 3 illustrate examples of converter cells;

Fig. 4 illustrates a phase unit of a modular multilevel converter according to an embodiment of the invention;

Fig. 5 illustrates a second phase unit of a modular multilevel converter according to an embodiment of the invention;

Fig. 6 illustrates a single phase modular multilevel converter according to an embodiment;

Fig. 7 illustrates a three phase modular multilevel converter according to an embodiment;

Figs. 8 and 9 illustrate further embodiments of phase units of a modular multilevel converter according to an embodiment of the invention;

The illustrations of the drawings are in schematic form. It is noted that in different figures, similar or identical elements use the same reference signs.

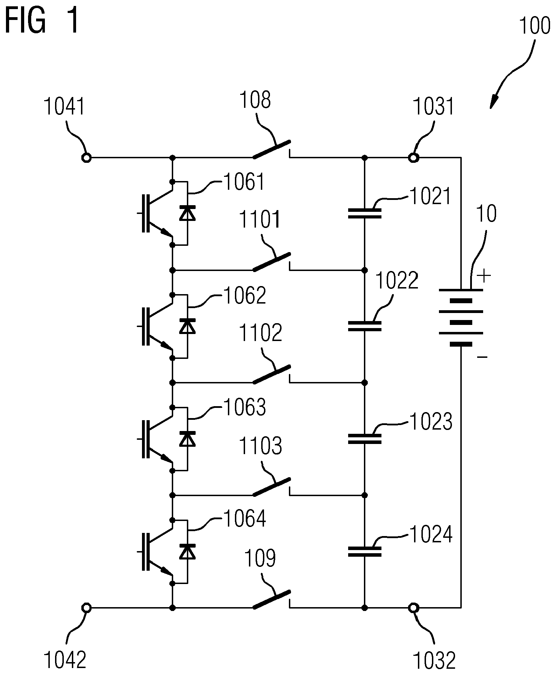

Fig. 1 shows a first embodiment of the invention. Via first DC terminals 1031, 1032, DC/DC converter 100 is connected to an MV DC source 10 with a voltage of 2.4 kV. This value is only an example and the MV DC source may have any other voltage such as 1 kV, 10 kV or 25 kV. DC/DC converter 100 could also be connected to an HV DC source with a voltage of 80 kV, 250 kV or 800 kV instead. For the present example, the MV DC voltage will be treated as an input voltage that is converted to a lower DC voltage with converter 100, but converter 100 can work bi-directionally and the output and input sides could be reversed.

Converter 100 has second DC terminals 1041, 1042 which may be connected to a DC voltage which is lower than the MV DC voltage. In this example, the second DC terminals 1041, 1042 are treated as the output terminals while the first DC terminals 1031, 1032 are treated as input terminals.

Converter 100 comprises a capacitor circuit of four capacitors 1021...1024 arranged in a series connection between the first DC terminals 1031, 1032. It further comprises a first switch circuit of four IGBTs 1061...1064 arranged in a series connection between the second DC terminals 1041, 1042.

Converter 100 comprises an upper switch circuit 108 connecting the upper first DC terminal 1031 to the upper second DC terminal 1041. A lower switch circuit 109 connects the lower first DC terminal 1032 to the lower second DC terminal 1042. Both the upper and lower switch circuit 108, 109 comprise a series connection of a number of IGBTs which depends on the voltages involved and the voltage rating of the IGBTs. In the present example with an input voltage of 2.4 kV and four capacitors 1021...1024 the upper and lower switch circuits 108, 109 must be able to block a voltage of 1.8 kV and for example two IGBTs with a voltage rating of 1700 V may be used in a series connection.

For each node between the capacitors 1021...1024 of the capacitor series, there is an anti-serial switch circuit 1101...1103 connecting that node to a corresponding node between the IGBTs 1061...1064 of the first switch circuit. The anti-serial switch circuits 1101...1103 each comprise at least two IGBTs connected in an anti-serial manner. Depending on the position in converter 100, in other words, which nodes an anti-serial switch circuit connects, the anti-serial switch circuits 1101...1103 may comprise multiple IGBTs for each of the two directions forming the anti-serial connection. In the present example, anti-serial switch circuits 1101, 1103 of the first and third nodes each must be able to block 1200 V, for which a single IGBT of a voltage rating of 1.7 kV is sufficient.

Thus the anti-serial switch circuits 1101, 1103 would comprise two IGBTs connected anti-serially. In another example, the input voltage may be 5 kV, requiring the blocking of 2.5 kV which would need two such IGBTs for each current direction, so in that case the anti-serial switch circuits 1101, 1103 would comprise four IGBTs. Returning to the example of 2.4 kV, the central anti-serial switch circuit 1102 will only need to block 600 V, meaning it would also comprise two IGBTs connected anti-serially.

In this way, converter 100 may be thought of as comprising a number of cells which are stacked, the cells being of similar but not equal setup. Each cell contains a capacitor and an IGBT opposite that capacitor. In this way the setup of converter 100 is modular. It is thus scalable to almost any input and output voltage. The ratio of input over output voltage determines the number of capacitors $N_C$ to use, i.e. $N_C \approx V_{in} / V_{out}$. When the number of capacitors 1021...1024 is set, the voltage $V_C$ of each capacitor 1021...1024 is $V_C = V_{in} / N_C$. As will be apparent from the description of the method of operating converter 100 described below, the output voltage is equal to the capacitor voltage, i.e. $V_{out} = V_C$.

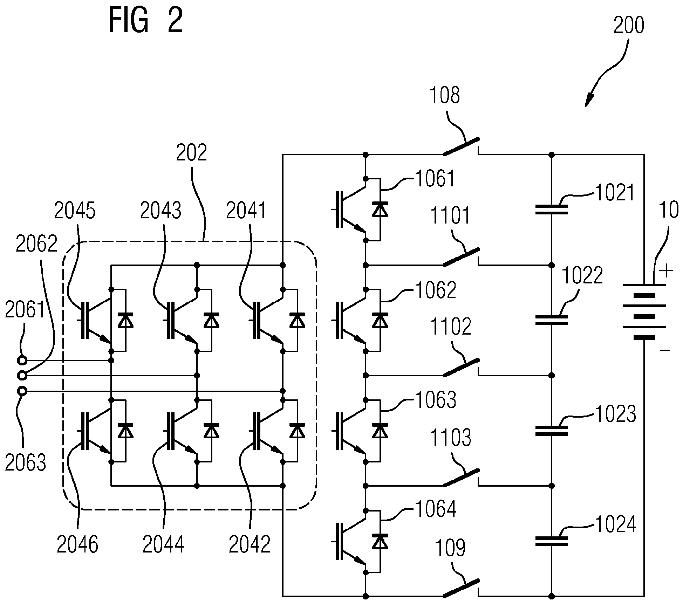

Fig. 2 shows inverter 200 which is a DC/AC converter. Again, inverter 200 can be operated bi-directionally and can thus also be used as a rectifying converter, but it will be described with the notion of the DC voltage being the input voltage and the AC voltage being the output voltage.

Inverter 200 comprises DC/DC converter 100 which is again connected to MV DC voltage source 10. In addition, it comprises bridge circuit 202 which is connected to the second terminals and which provides AC output terminals 2061...2063. Bridge circuit 202 comprises three half-bridges of two IGBTs 2041...2046 each, arranged in parallel and connected between the second DC terminals 1041, 1042. Each of the middle nodes of the half-bridges forms an AC terminal 2061...2063 of inverter 200.

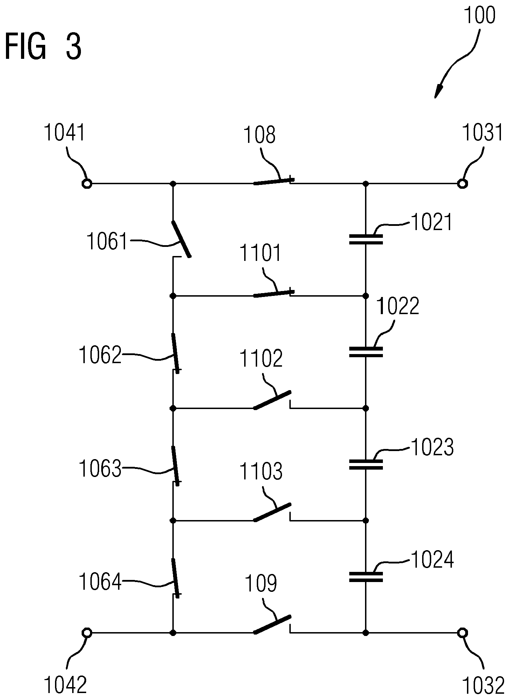

During operation, converter 100 cycles through the switching steps shown in Figs. 3 to 6. In Figs. 3 to 6 all IGBTs have been replaced with generalized switches for the purpose of visibility. Converter 100 and inverter 200 are unchanged from the previous figs. Also, since the switching steps are independent from the operation of bridge circuit 202, bridge circuit 202 is omitted from figs. 3 to 6. Figs. 3 to 6 are thus applicable to both converter 100 and inverter 200. There are four switching steps, one for each of the capacitors 1021...1024. In other embodiments of converter 100 or inverter 200 there may be a different number of capacitors 1021...1024 and thus a different number of switching steps. In each of the switching steps, one of the capacitors 1021...1024 is connected to the second DC terminals 1041, 1042. In this way that capacitor effectively provides the output DC voltage for converter 100 and an intermediate DC voltage for inverter 200. In the first switching step of Fig. 3 upper switching circuit 108 and anti-serial switching circuit 1101 are closed, i.e. conductive. In addition, all IGBTs 1061...1064 except for the uppermost IGBT 1061 corresponding to the uppermost capacitor 1021 are closed. Thus, the nodes of the uppermost capacitor 1021 are now conductively connected to the second DC terminals 1041, 1042, while the remaining capacitors 1022...1024 are not. After a step length of for example 20 ms, the second switching step is invoked.

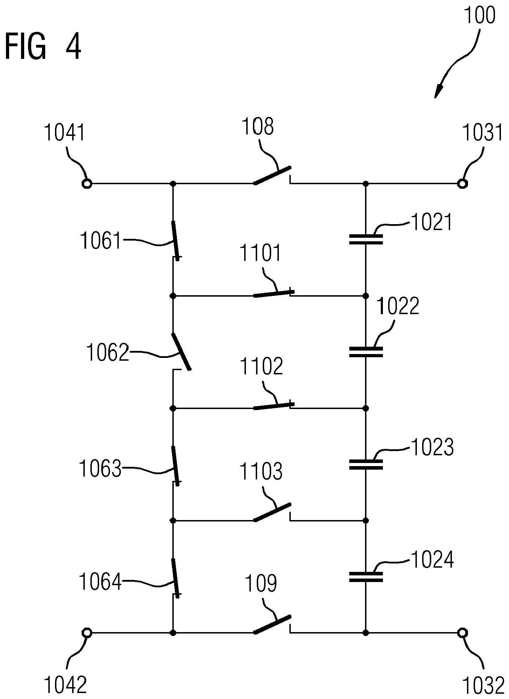

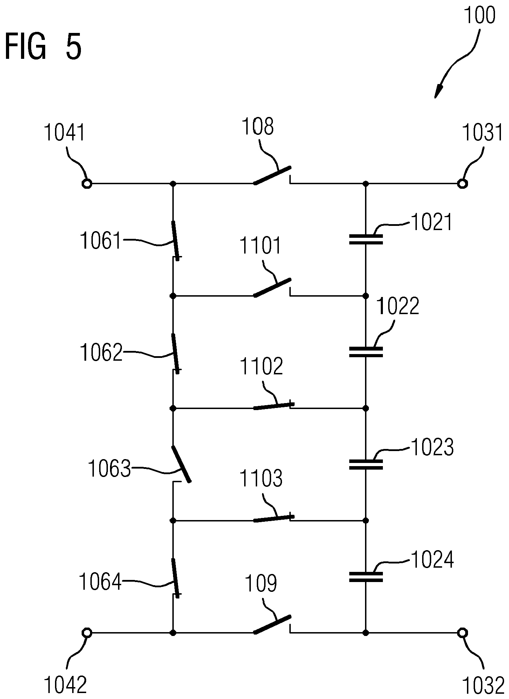

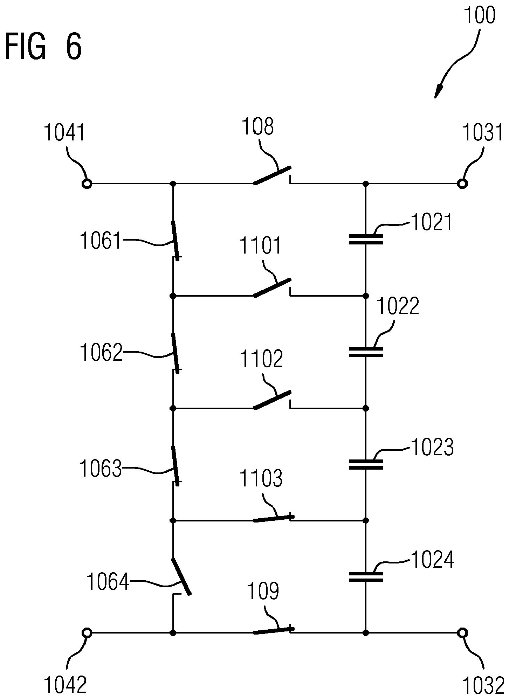

In the second switching step of Fig.4, the anti-serial switching circuits 1101, 1102 connecting to the second capacitor 1022 are closed, as are all IGBTs 1061...1064 of the first switching circuit but the second IGBT 1062 corresponding to the second capacitor 1022. All other switches are open. Thus, the nodes of the second capacitor 1022 are now conductively connected to the second DC terminals 1041, 1042. Figs. 5 and 6 show the state of the switching circuits for the third and fourth switching steps. After concluding the fourth switching step, the controller returns to the first switching step. This method of operation at once ensures that the voltage at the second DC terminals 1041, 1042 is a fraction of the voltage at the first DC terminals according to the number of capacitors 1021...1024 and keeps the voltage of the capacitors balanced.

For inverter 200, the bridge circuit 202 acts as a typical two-level inverter stage in which the IGBTs are switched in a pulse-width modulation mode with a frequency that is high compared to the frequency of the resulting AC voltage, thus the IGBTs are typically switched at a frequency of several kHz, for example 15 kHz or 48 kHz. In this way, inverter 200 acts to step down a voltage and converts it to an AV voltage without the use of a transformer.

The embodiments shown in the figures and described here use four capacitors 1021...1024. Other embodiments may use a different number of capacitors. This, together with the value of the input voltage, may lead to different values for the capacitor voltage VC and for the voltage rating requirements for the switching circuits. These requirements are in general form:

- Upper and lower switching circuit 108, 109: $V_{in}$ - $V_C$
- First and last anti-serial switching circuit 1101, 1103:

$$V_{in} \; - \; 2*V_C$$

- Second and next to last anti-serial switching circuit 1102:

$$V_{in} \; - \; 3*V_C$$

and so on.

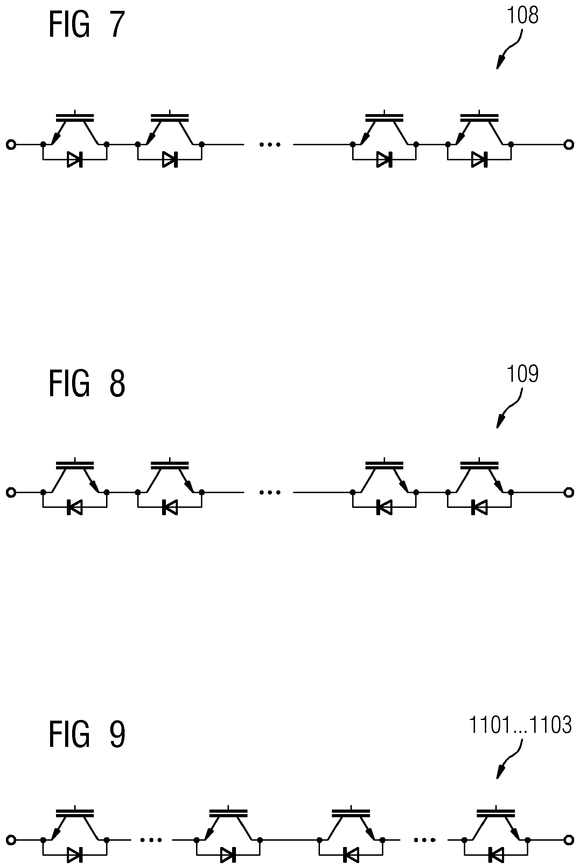

Figs. 7 to 9 show generalized configurations for the upper and lower switching circuits 108, 109 and for the anti-serial switching circuits 1101...1103. It is to be understood that the upper and lower switching circuits may comprise a single semiconductor if the voltage blocking requirement is low enough, and each of the anti-serial switching circuits may comprise two semiconductors, one in each direction, if the voltage blocking requirement is low enough.

List of reference signs

| | |
|---|---|
| 10 | MVDC source |
| 100 | Converter |
| 1021...1024 | Capacitor |
| 1031, 1032 | First DC terminals |
| 1041, 1042 | Second DC terminals |
| 1061...1064 | IGBTs |
| 108 | Upper switch circuit |
| 109 | Lower switch circuit |
| 1101...1103 | Anti-serial switch circuit |
| 200 | Inverter |
| 202 | Bridge circuit |
| 2041...2046 | IGBTs |
| 2061...2063 | AC terminals |

**Claims**

1. A DC/DC converter (100, 200), comprising:

    - an upper and lower first terminal (1031, 1032) for connecting to a first DC voltage;
    - at least two serially connected capacitors (1021...1024) forming a capacitor series which is arranged between the first terminals (1031, 1032) and an equal number of serially connected semiconductor switches (1061...1064) forming a first switch series, wherein second terminals (1041, 1042) for connecting to a second DC voltage are formed by the terminals of the first switch series;
    - an upper switch (108) comprising a serial connection of one or more semiconductor switches connected between the upper first terminal (1031) and the upper second terminal (1041);
    - a lower switch (109) comprising a serial connection of one or more semiconductor switches connected between the lower first terminal (1032) and the lower second terminal (1042);
    - for each node between consecutive capacitors (1021...1024) of the capacitor series, an anti-serial circuit (1101...1103) of at least two semiconductor switches connecting that node to a corresponding node between consecutive switches (1061...1064) of the first switch series.

2. The converter (100, 200) of claim 1 comprising a controller for controlling the switches (1061...1064, 108, 109, 1101...1103), the controller being arranged to

    - at any one time, connect a single one of the capacitors (1021...1024) of the capacitor series to the second terminals (1041, 1042) by switching on all semiconductor switches (1061...1064) of the first switch series except for the semiconductor switch (1061...1064) corresponding to that capacitor (1021...1024) and switching on the anti-serial circuits (1101...1103) and/or upper or lower switch (108, 109) directly connected to that capacitor (1021...1024) while switching off all other of the anti-serial circuits (1101...1103) and/or upper or lower switches (108, 109);
    - over time, alternate between capacitors (1021...1024) chosen as that single one capacitor (1021...1024).

3. The converter (100, 200) of claim 2 wherein the controller is arranged to alternate only between capacitors (1021...1024) of a subset of the capacitors (1021...1024) of the capacitor series.

4. The converter (100, 200) of any of the preceding claims wherein the upper and lower switch (108, 109) comprise the same number of semiconductor switches.

5. The converter (100, 200) of any of the preceding claims wherein the semiconductor switches (1061...1064) are IGBTs (1061...1064) .

6. A converter (100, 200) for converting between a DC voltage of a first voltage level and an AC voltage of a second voltage level that is lower than the first voltage level, comprising a DC/DC converter stage (100) according to any of the preceding claims and a DC/AC converter stage (202), wherein the DC/AC converter stage comprises a parallel circuit of one or more half-bridges of diodes or semiconductor switches arranged between the second terminals (1041, 1042), the node between the diodes or semiconductor switches of each of the half-bridges forming an AC terminal of the converter.

FIG 1

# FIG 2

FIG 3

FIG 4

100

1041     108     1031

1061

1101     1021

1062     1022

1102

1063     1023

1103

1064     1024

109

1042     1032

# FIG 5

## FIG 6

100

1041   108   1031

1061   1101   1021

1062   1102   1022

1063   1103   1023

1064   1024

1042   109   1032

FIG 7

108

FIG 8

109

FIG 9

1101...1103

Europäisches
Patentamt

European
Patent Office

Office européen
des brevets

# EUROPEAN SEARCH REPORT

**Application Number**

EP 19 20 2214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2012 208884 A1 (DENSO CORP [JP]) 6 December 2012 (2012-12-06) * paragraphs [0024] - [0028], [0040], [0043]; figures 1,2,3 * ----- | 1-6 | INV. H02M3/06 ADD. H02M3/07 H02M7/5387 H02M1/00 |
| X | CN 209 120 058 U (SUZHOU INOVANCE AUTOMOTIVE CO LTD) 16 July 2019 (2019-07-16) * figures 1-4 * ----- | 1-6 | |

TECHNICAL FIELDS
SEARCHED (IPC)

H02M
H02J

The present search report has been drawn up for all claims

| Place of search | Date of completion of the search | Examiner |
|---|---|---|
| The Hague | 15 April 2020 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

               

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 2214

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2020

| Patent document cited in search report | Publication date | Patent family member(s) | Publication date |
|---|---|---|---|
| DE 102012208884 A1 | 06-12-2012 | DE 102012208884 A1<br>JP 2012253942 A<br>US 2012307526 A1 | 06-12-2012<br>20-12-2012<br>06-12-2012 |
| CN 209120058 U | 16-07-2019 | NONE | |

EPO FORM P0459

For more details about this annex : see Official Journal of the European Patent Office, No. 12/82